# EUROPEAN PATENT APPLICATION

(11) **EP 4 443 819 A1**
(43) Date of publication of application: **09.10.2024**
(21) Application number: 24161705.9
(22) Date of filing: 06.03.2024
(51) Int. Cl.: H04L 9/40

(54) **AUTHENTICATION RELAY SERVER AND AUTHENTICATION PROGRAM**

(30) Priority: 07.04.2023 JP 2023063009
(71) Applicant: OMRON Corporation, Kyoto 600-8530 (JP)
(72) Inventor: MATSUO, Yuji, Kyoto, 617-0002 (JP)
(74) Representative: Becker, Eberhard

(57) **Abstract**

An authentication relay server that adds a lacking authentication processing to an authentication processing of a cloud is realized. An authentication relay server (10) that relays between an authentication server (20) and a user system (30) includes: a user-side communication part (11) that transmits and receives a first request (41) and a first response (42) to and from the user system; a constraint authentication processing part (12) that performs, in response to the first request, an authentication processing different from an authentication processing performed in the authentication server; and a server-side communication part (13) that transmits and receives a second request (51) and a second response (52) to and from the authentication server.

## Description

### BACKGROUND

### Technical Field

The disclosure relates to an authentication relay server.

### Related Art

Users using a cloud computing system (hereinafter simply referred to as a "cloud") authenticate themselves to the cloud. A general-purpose authentication processing is constructed in the cloud, and a vendor developing services may construct services with a high-quality user authentication function and identification for each user by using the authentication processing prepared by the cloud without incurring development costs.

Patent Document 1 discloses that services are coordinated among multiple clouds to perform processings.

### Related Art Documents

### Patent Documents

[Patent Document 1] Japanese Patent Application Laid-Open No. 2020-031305

### SUMMARY

### [Problem to Be Solved]

Depending on the specifications of service, a vendor may tighten requirements for the authentication processing for the service. Thus, there may be cases where an authentication processing that satisfies the requirements cannot be constructed with the authentication processing prepared by the cloud alone.

An aspect of the disclosure aims to realize an authentication relay server that adds a lacking authentication processing to an authentication processing of a cloud.

### [Solutions for Problem]

To solve the above problem, an authentication relay server according to an aspect of the disclosure is an authentication relay server that relays between an authentication server providing a user authentication function and a predetermined system used by a user. The authentication relay server includes a user-side communication part, a constraint authentication processing part, and a server-side communication part. The user-side communication part receives a first authentication request from the system and transmits a first response as an authentication result to the system. The constraint authentication processing part performs, in response to the first authentication request, an authentication processing different from an authentication processing performed in the authentication server. The server-side communication part transmits a second authentication request to the authentication server in response to a processing of the constraint authentication processing part and receives a second response from the authentication server.

With the above configuration, it is possible to realize a desired authentication function by executing a constraint authentication processing, which is not prepared in the authentication server, by the authentication relay server.

The user-side communication part may include a display control part that performs display associated with at least the first authentication request on the system.

With the above configuration, it is possible to notify the user system of an instruction for an additional input. Accordingly, the user can learn about a result of authentication and a processing additionally required.

The first authentication request may serve to change a password used for the second authentication request. The constraint authentication processing part may confirm whether a password to be changed to in the first authentication request is different from a password used for authentication in the authentication server in the past.

With the above configuration, in the case of changing a password, since a password that has been used in the past cannot be used, security can be improved.

The first authentication request may be a login to the authentication server by the system used by the user. The constraint authentication processing part may be configured to: issue an authentication code authenticating the login for the authentication relay server, transmit a response including the authentication code to the user via a means of contact different from the first response, and complete the login to the authentication server by performing a processing of another first authentication request including the authentication code from the system.

With the above configuration, in the case of performing authentication, since the authentication is performed using two authentication means, even if information (e.g., a password) related to one of the authentications is leaked, a person other than the user becomes unable to perform authentication. As a result, security is improved.

The authentication relay server according to each aspect of the disclosure may be realized by a computer, and in that case, an authentication processing program of the authentication relay server that realizes the authentication relay server in a computer by causing the computer to act as each part (software element) included in the authentication relay server, and a computer-readable recording medium that records the authentication processing program also fall within the scope of the disclosure.

### [Effect]

According to an aspect of the disclosure, it is possible to realize an authentication relay server that adds a lacking authentication processing to an authentication processing of a cloud.

### BRIEF DESCRIPTION OF DRAWINGS

FIG. 1 is a block diagram showing configurations of main parts of an authentication system according to Embodiment 1.
FIG. 2 is a sequence diagram related to authentication in the authentication system.
FIG. 3 is a flowchart showing a processing related to authentication in an authentication relay server.
FIG. 4 is a sequence diagram of an authentication system according to Embodiment 2.
FIG. 5 is a flowchart showing a flow of a processing of a constraint authentication processing part according to Embodiment 2.
FIG. 6 is a sequence diagram of an authentication system according to Embodiment 3.

### DESCRIPTION OF EMBODIMENTS

### [Embodiment 1]

Hereinafter, an embodiment (hereinafter referred to as "present embodiment") according to an aspect of the disclosure will be described with reference to the drawings. The same or corresponding portions in the drawings will be labeled with the same reference signs, and descriptions thereof will not be repeated.

### (1) Application example

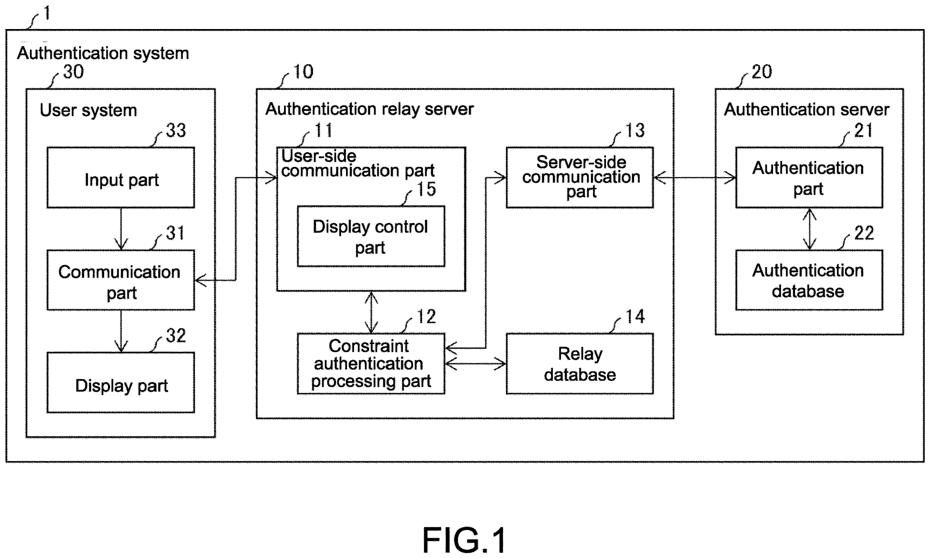

FIG. 1 is a block diagram showing configurations of main parts of an authentication system 1 according to Embodiment 1. The authentication system 1 includes an authentication relay server 10, an authentication server 20, and a user system 30.

The authentication server 20 is a server that provides a user authentication function and is connected to a cloud on which services are running. The authentication server 20 is provided with an authentication processing that satisfies various requirements in advance. For example, the authentication processing is an authentication processing for a password in accordance with a predetermined format.

The user system 30 (predetermined system) is a predetermined system used by a user, may be, for example, a terminal such as a personal computer and a smartphone, and may further include a WEB service in addition to these terminals. The user system 30 is provided with multiple communication functions, such as connection to the Internet, transmission and reception of emails, making telephone calls, and transmission and reception of SMS (short message service). In the case where an authentication processing becomes necessary according to the user's operation, the user system 30 performs communication with the authentication server 20 via the authentication relay server 10 to perform authentication.

The authentication relay server 10 processes an authentication request for service received from the user system 30, relays the authentication request to the authentication server 20, and authenticates the authentication request with respect to the authentication server 20. At this time, an authentication function that secures an authentication processing not provided in the authentication server 20 (hereinafter, an authentication processing not provided in the authentication server 20 will be referred to as a "constraint authentication processing") is provided in the authentication relay server 10.

Thus, by providing the constraint authentication processing as an authentication function in the authentication relay server 10, a vendor can realize a desired authentication function.

### (2) Configuration example

### (Authentication server 20)

The authentication server 20 includes an authentication part 21 and an authentication database 22. The authentication part 21 establishes communication between the authentication server 20 and the authentication relay server 10, and authenticates access to the authentication server 20 based on a request from the authentication relay server 10.

Various user information is stored in the authentication database 22. The authentication part 21 determines whether a request from the authentication relay server 10 is valid by querying a content of the request to the authentication database 22. In other words, the user information stored in the authentication database 22 includes at least a user ID and a password.

### (User system 30)

The user system 30 includes a communication part 31, a display part 32, and an input part 33. These parts may be distributed among configurations that constitute the user system 30. For example, in the case where the user system 30 is composed of a smartphone used by the user and a WEB service on a server accessed by the smartphone, the communication part 31 is provided at the WEB service, and the display part 32 and the input part 33 are provided at the smartphone. Further, in the case where the user system 30 is a smartphone used by the user, the communication part in particular is provided in software operating on the smartphone.

The communication part 31 establishes communication between the user system 30 and the authentication relay server 10 and transmits various requests. The display part 32 displays a content of a response from the authentication relay server 10. The input part 33 inputs a content of a request to the authentication relay server 10, and, for example, receives inputs of a user ID and a password.

### (Authentication relay server 10)

The authentication relay server 10 includes a user-side communication part 11, a constraint authentication processing part 12, a server-side communication part 13, and a relay database 14. The user-side communication part 11 establishes communication between the user system 30 and the authentication relay server 10. The server-side communication part 13 establishes communication between the authentication server 20 and the authentication relay server 10.

The authentication relay server 10 may be configured by a function-as-a-server (FaaS) service. Further, the authentication relay server 10 may perform communication via an API gateway, and the authentication server 20 and the authentication relay server 10 may be implemented on the same server and perform communication via an API.

The constraint authentication processing part 12 executes a constraint authentication processing. When executing the constraint authentication processing, the constraint authentication processing part 12 may access the relay database 14 and refer to necessary information. In other words, the constraint authentication processing part 12 inputs and outputs information from and to the user-side communication part 11, the server-side communication part 13, and the relay database 14. Further, the constraint authentication processing part 12 outputs information related to a result of the constraint authentication processing to a display control part 15.

Further, the user-side communication part 11 includes a display control part 15 that controls a content to be displayed in the user system 30.

### (3) Operation example

### (Flow of authentication in authentication system 1)

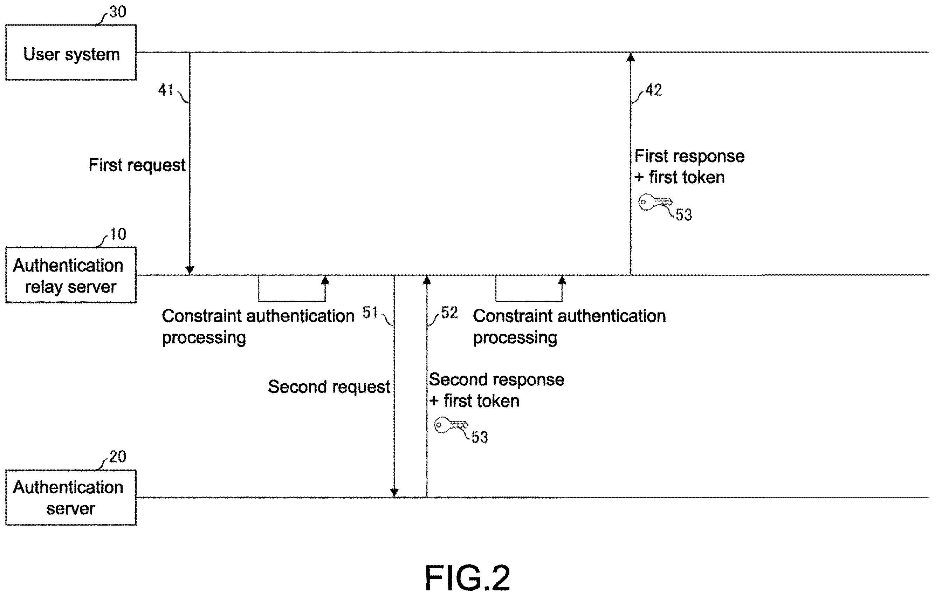

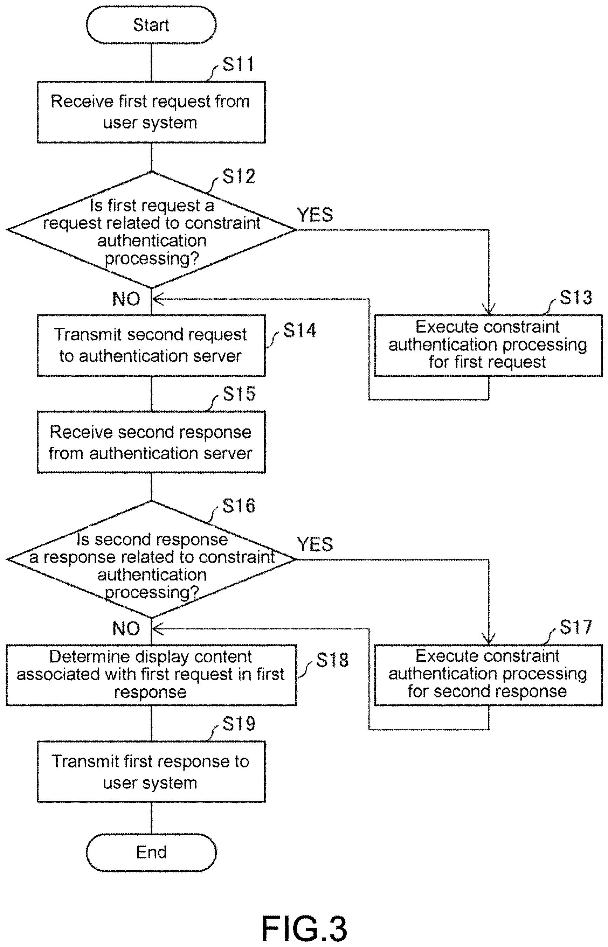

FIG. 2 is a sequence diagram related to authentication in the authentication system 1. FIG. 3 is a flowchart showing a processing related to authentication in the authentication relay server 10. The input part 33 of the user system 30 receives an input of information necessary for authentication, e.g., a user ID and a password, from the user. Subsequently, the communication part 31 of the user system 30 transmits a first request 41 to the user-side communication part 11 of the authentication relay server 10. In other words, the user-side communication part 11 receives the first request 41 (first authentication request) from the user system 30 (S11).

In response to the first request 41, the constraint authentication processing part 12 of the authentication relay server 10 performs a constraint authentication processing different from the authentication processing performed in the authentication server. That is, the constraint authentication processing part 12 determines whether the first request 41 is a request related to a constraint (S12). In the case where the first request 41 is not a request related to the constraint ("No" in S12), the process proceeds to S14. In the case where the first request 41 is a request related to the constraint ("Yes" in S12), the constraint authentication processing part 12 executes a constraint authentication processing for the first request (S13). In other words, the constraint authentication processing part 12 creates a second request 51 (second authentication request) based on the first request 41 according to the constraint authentication processing. Subsequently, the server-side communication part 13 of the authentication relay server 10 transmits the second request 51 to the authentication part 21 of the authentication server 20 (S14).

The authentication part 21 of the authentication server 20 performs an authentication processing based on the second request 51 and transmits a result thereof as a second response 52 to the server-side communication part 13. That is, the server-side communication part 13 receives the second response 52 from the authentication server 20 (S15). The second response 52 may include a first token 53 indicating that authentication has been completed.

The constraint authentication processing part 12 of the authentication relay server 10 performs a necessary processing based on the content of the second response. That is, the constraint authentication processing part 12 determines whether the second response 52 is a response related to the constraint (S16). In the case where the second response 52 is not a response related to the constraint ("No" in S16), the process proceeds to S18. In the case where the second response 52 is a response related to the constraint ("Yes" in S16), the constraint authentication processing part 12 executes a constraint authentication processing for the second response 52 (S17). In other words, the constraint authentication processing part 12 creates a first response 42 based on the second response 52 according to the constraint authentication processing.

At this time, the display control part 15 creates a display content associated with at least the first request 41 on the user system 30 as the first response 42 (S18). Further, the first response 42 may include a display content associated with the constraint authentication processing.

Subsequently, the user-side communication part 11 of the authentication relay server 10 transmits the first response 42 as an authentication result to the communication part 31 of the user system 30 (S19). The first response 42 may include the first token 53.

The display part 32 of the user system 30 displays the result of the first response 42 to the user.

### (4) Action and effect

A constraint authentication processing is capable of being executed by the constraint authentication processing part 12. Accordingly, it becomes possible to realize an authentication function that is not capable of being realized by the authentication part 21. Thus, the vendor can realize an authentication function that is highly reliable and satisfies requirements of the service according to the specifications of the service.

Further, in a plurality of services, in the case where the specifications of the services are common, one authentication relay server 10 may be used to perform the authentication function of the plurality of services. Of course, in the case where the specifications of service in the plurality of services are different from each other, a plurality of authentication relay servers 10 may be used, with an authentication relay server 10 used for each service.

### [Embodiment 2]

Another embodiment of the disclosure will be described below. For convenience of illustration, members having the same functions as those described in the above embodiment will be labeled with the same reference signs, and descriptions thereof will not be repeated.

### (Change in password)

An example of a specific processing of the constraint authentication processing part 12 according to Embodiment 2 will be shown. The authentication database 22 stores only a current value of a password used for authentication, and the authentication part 21 performs authentication using this password.

As a result, in the authentication processing of the authentication part 21, in the case of changing a password, it is possible to change to a password that has been used in the past. For example, there is an application of alternately changing between two passwords. In such a case, with the authentication processing of the authentication part 21 alone, vulnerability arises in the authentication function.

Thus, the constraint authentication processing part 12 executes a constraint authentication processing different from the authentication processing of the authentication part 21. As the constraint authentication processing, Embodiment 2 shows an example in which a password history of passwords that have been used in the past is stored in the relay database 14, and in the case where a password to be changed to has been used in the past, an error is generated and the password is not changed. The number of passwords to be referred to as the password history is set to the most recent five passwords, but is not limited thereto and may be any number.

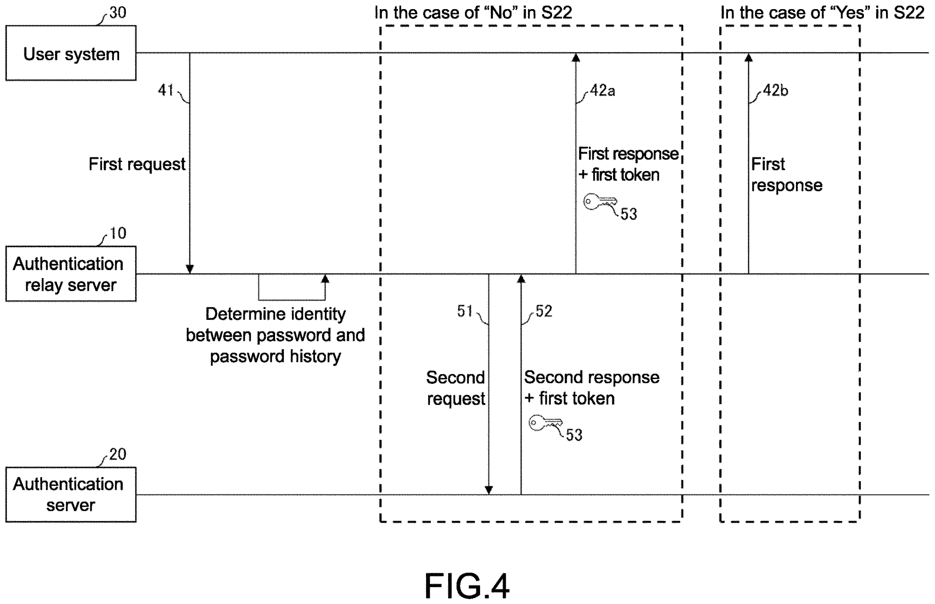

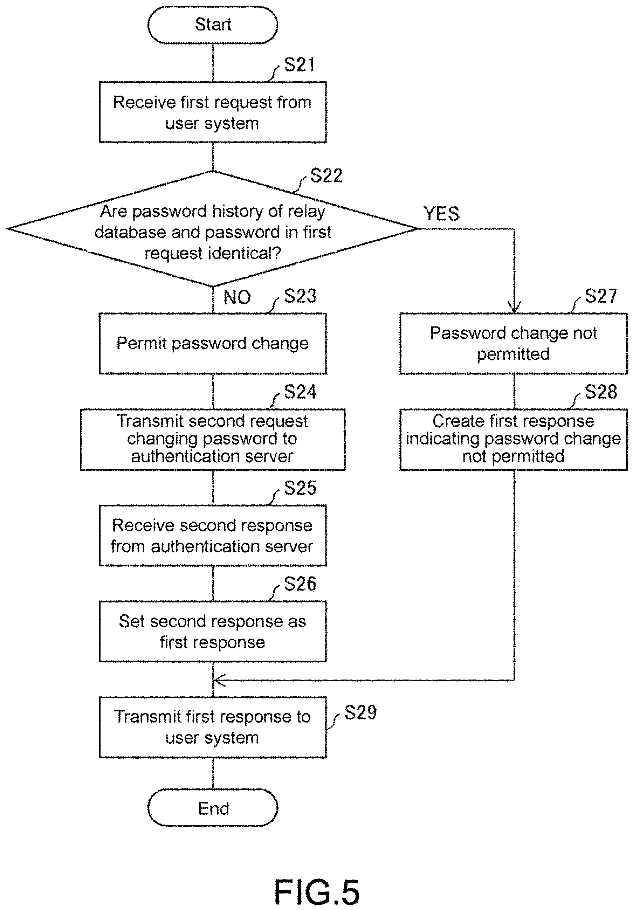

FIG. 4 is a sequence diagram of the authentication system 1 according to Embodiment 2. FIG. 5 is a flowchart showing a flow of a processing of the constraint authentication processing part 12 according to Embodiment 2. Information necessary for a change in a password, e.g., a new password, is inputted using the input part 33 of the user system 30. Then, the communication part 31 of the user system 30 transmits a first request 41 to the user-side communication part 11 of the authentication relay server 10. In other words, the user-side communication part 11 receives the first request 41 from the user system 30 (S21).

The constraint authentication processing part 12 compares the password in the first request 41 with a password history in the relay database 14 and determines whether they are identical (S22).

In the case where the password in the first request 41 and the password history are not identical ("No" in S22), the constraint authentication processing part 12 permits the change in the password (S23). Thus, the server-side communication part 13 transmits a second request 51 containing information related to the new password to the authentication part 21 of the authentication server 20 (S24). Subsequently, the authentication part 21 of the authentication server 20 performs a change processing of password and transmits a second response 52 to the authentication relay server 10. The server-side communication part 13 receives the second response 52 from the authentication server 20 (S25). The constraint authentication processing part 12 sets the second response 52 as a first response 42a (S26). In other words, the display control part 15 creates a display content notifying the user system 30 that the change in the password has succeeded.

In the case where the password in the first request 41 and the password history are identical ("Yes" in S22), the constraint authentication processing part 12 does not permit the change in the password (S27). Thus, the constraint authentication processing part 12 creates a first response 42b indicating that the password change is not permitted (S28). In other words, the display control part 15 creates a display content notifying the user system 30 that the change in the password has failed.

The user-side communication part 11 transmits the first response 42a or the first response 42b to the user system 30 (S29). Accordingly, the user can confirm whether the change in the password is permitted or not on the display part 32 of the user system 30.

Thus, in the case where the first request 41 is to change a password used for the second request 51, the constraint authentication processing part 12 is capable of confirming whether the password to be changed to in the first request 41 is different from the password used for authentication in the authentication server 20 in the past. Accordingly, security for passwords is improved.

The password history may be stored as encrypted passwords or hash values. In this case, a new password is compared with encrypted or hashed passwords using the same method. Accordingly, it is possible to reduce risks in the case of leakage of the password history.

### [Embodiment 3]

Another embodiment of the disclosure will be described below. For convenience of illustration, members having the same functions as those described in the above embodiment will be labeled with the same reference signs, and descriptions thereof will not be repeated.

### (Multi-factor authentication)

An example of a specific processing of the constraint authentication processing part 12 according to Embodiment 3 will be shown. At the time of authentication, the authentication part 21 performs authentication using a user ID and a password. Today, to deal with loss of the user system or loss of notes of passwords and the like, it is recommended to confirm the identity of the user at the time of authentication.

For example, in the case of a user system 30 that is authenticated for the first time, an authentication code prepared by the service side may be transmitted to a different means of contact (e.g., email or SMS) registered with the user ID, and the user may be asked to input this authentication code. These authentication functions are referred to as multi-factor authentication.

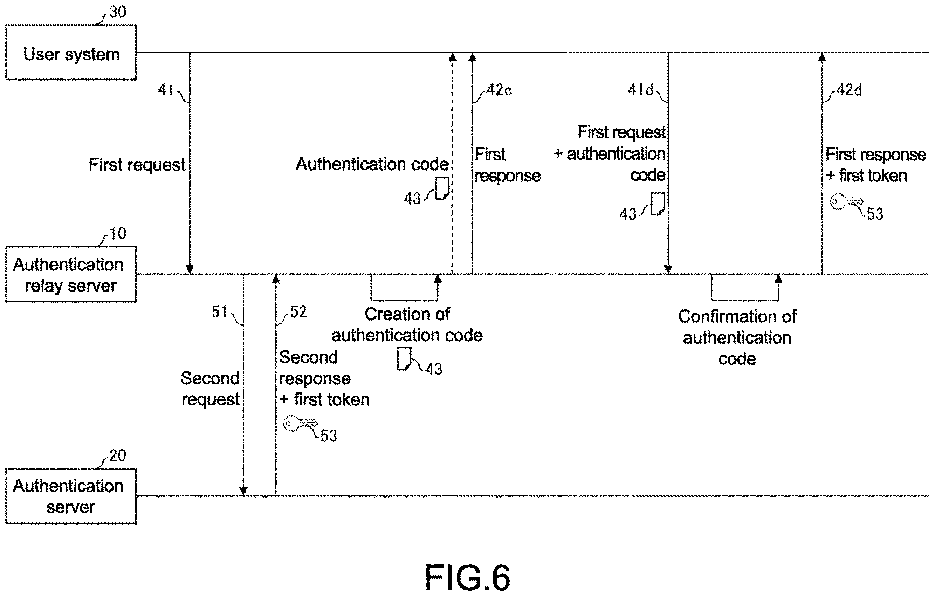

FIG. 6 is a sequence diagram of an authentication system 1 according to Embodiment 3. A user ID and a password necessary for authentication are inputted using the input part 33 of the user system 30. Subsequently, the communication part 31 of the user system 30 transmits a first request 41c (first authentication request) to the user-side communication part 11 of the authentication relay server 10. In other words, the user-side communication part 11 receives the first request 41c from the user system 30. The first request 41c is a login (authentication) to the authentication server 20 by the user system 30 used by the user.

Based on the first request 41c, the server-side communication part 13 transmits a second request 51 to the authentication server 20. As a result, the authentication part 21 performs authentication based on the second request 51. In the case where authentication has succeeded, the authentication part 21 transmits a second response 52 including a first token 53 to the server-side communication part 13 of the authentication relay server 10.

The authentication relay server 10 receives the second response 52, and the constraint authentication processing part 12 creates (issues) an authentication code 43. The user-side communication part 11 transmits a first response 42c to the user system 30. The display content of the first response 42c created by the display control part 15 notifies that although authentication has succeeded, an additional authentication with the authentication code 43 is necessary.

At the same time as the first response 42c, the constraint authentication processing part 12 transmits the authentication code 43 to the user by a means of contact different from the first response 42c. The user may confirm the authentication code 43 using the different means of contact by the user system 30. Examples of the means of contact different from the first response 42c include, for example, email or SMS.

The user confirms the authentication code 43, inputs the authentication code 43 using the input part 33, and then transmits a first request 41d (another first authentication request) containing the authentication code 43 from the communication part 31 to the authentication relay server 10. The constraint authentication processing part 12 completes the login to the authentication server 20 by performing a processing of the first request 41d containing the authentication code 43 from the user system 30. The processing for the first request 41d in the constraint authentication processing part 12 is a processing of confirming whether the authentication code 43 in the received first request 41d is identical to the desired authentication code 43.

In the case where the authentication code 43 is identical, the user-side communication part 11 transmits a first response 42d containing a first token 53 to the communication part 31. Accordingly, the authentication ends normally. If the authentication code 43 is not identical, the user-side communication part 11 may return a first response 42d containing error information.

Thus, by using multi-factor authentication, even if the set of the user ID and the password is leaked, multi-factor authentication becomes necessary since it is an authentication application from a new terminal, and the leak destination becomes unauthenticated. In other words, security is improved. Further, by using an item that an individual generally does not use in a plurality (e.g., a mobile phone number or an SMS associated with that number) for multi-factor authentication, it is possible to avoid application for multiple user IDs by one user.

### [Summary]

According to an authentication relay server related to Aspect 1 of the disclosure, an authentication relay server relays between an authentication server providing a user authentication function and a predetermined system used by a user. The authentication relay server includes a user-side communication part, a constraint authentication processing part, and a server-side communication part. The user-side communication part receives a first authentication request from the system and transmits a first response as an authentication result to the system. The constraint authentication processing part performs, in response to the first authentication request, an authentication processing different from an authentication processing performed in the authentication server. The server-side communication part transmits a second authentication request to the authentication server in response to a processing of the constraint authentication processing part and receives a second response from the authentication server.

According to the authentication relay server related to Aspect 2 of the disclosure, in Aspect 1, the user-side communication part may include a display control part that performs display associated with at least the first authentication request on the system.

According to the authentication relay server related to Aspect 3 of the disclosure, in Aspect 1 or 2, the first authentication request may serve to change a password used for the second authentication request. The constraint authentication processing part may confirm whether a password to be changed to in the first authentication request is different from a password being used for authentication in the authentication server.

According to the authentication relay server related to Aspect 4 of the disclosure, the first authentication request may be a login to the authentication server by the system used by the user. The constraint authentication processing part may be configured to: issue an authentication code authenticating the login for the authentication relay server, transmit a response including the authentication code to the user via a means of contact different from the first response, and complete the login to the authentication server by performing a processing of another first authentication request including the authentication code from the system.

### [Example of realization by software]

The functions of the authentication relay server 10 (hereinafter referred to as "device") may be realized by a program for causing a computer to function as the device and for causing the computer to function as each control block of the device.

In this case, the device includes a computer having at least one control device (e.g., a processor) and at least one storage device (e.g., a memory) as hardware for executing the program. With the program executed by the control device and the storage device, each function described in each embodiment above is realized.

The program may be recorded on one or more non-transitory computer-readable recording media. The recording medium may or may not be provided in the device. In the latter case, the program may be supplied to the device via any wired or wireless transmission medium.

Further, a part or all of the functions of each control block may be realized by a logic circuit. For example, an integrated circuit formed with a logic circuit that functions as each control block above is also included in the scope of the disclosure. In addition, for example, it is also possible to realize the function of each control block by a quantum computer.

Further, each processing described in each embodiment above may be executed by artificial intelligence (Al). In this case, the AI may operate on the control device or may operate on another device (e.g., an edge computer or a cloud server).

### [Note]

The disclosure is not limited to the embodiments described above, and various changes may be made within the scope shown in the claims. Embodiments obtained by appropriately combining technical means disclosed in different embodiments are also included in the technical scope of the disclosure.

### [Reference Signs List]

- 1: Authentication system
- 10: Authentication relay server
- 11: User-side communication part
- 12: Constraint authentication processing part
- 13: Server-side communication part
- 14: Relay database
- 15: Display control part
- 20: Authentication server
- 21: Authentication part
- 22: Authentication database
- 30: User system (predetermined system)
- 31: Communication part
- 32: Display part
- 33: Input part
- 41, 41c, 41d: First request (first authentication request)
- 42, 42a, 42b, 42c, 42d: First response
- 43: Authentication code
- 51: Second request (second authentication request)
- 52: Second response
- 53: First token

## Claims

1. An authentication relay server (10) that relays between an authentication server (20) providing a user authentication function and a predetermined system (30) used by a user, the authentication relay server (10) comprising:
a user-side communication part (11) that receives a first authentication request from the system (30) and transmits a first response as an authentication result to the system (30);
a constraint authentication processing part (12) that performs, in response to the first authentication request, an authentication processing different from an authentication processing performed in the authentication server (20); and
a server-side communication part (13) that transmits a second authentication request to the authentication server (20) in response to a processing of the constraint authentication processing part (12) and receives a second response from the authentication server (20).

2. The authentication relay server (10) according to claim 1, wherein
the user-side communication part (11) comprises a display control part (15) that performs display associated with at least the first authentication request on the system (30).

3. The authentication relay server (10) according to claim 1, wherein
the first authentication request is to change a password used for the second authentication request, and
the constraint authentication processing part (12) confirms whether a password to be changed to in the first authentication request is different from a password used for authentication in the authentication server (20) in the past.

4. The authentication relay server (10) according to claim 1, wherein
the first authentication request is a login to the authentication server (20) by the system (30) used by the user, and
the constraint authentication processing part (12) is configured to:
issue an authentication code authenticating the login for the authentication relay server (10),
transmit a response comprising the authentication code to the user via a means of contact different from the first response, and
complete the login to the authentication server (20) by performing a processing of another first authentication request comprising the authentication code from the system (30).

5. An authentication program, which is a relay program for causing a computer to function as the authentication relay server (10) according to claim 1, the authentication program serving to cause the computer to function as the user-side communication part (11), the constraint authentication processing part (12), and the server-side communication part (13).
